# FASCICULE DE BREVET EUROPEEN

(11) **EP 0 579 529 B1**
(45) Date de publication et mention de la délivrance du brevet: **14.01.1998**
(21) Numéro de dépôt: 93401768.2
(22) Date de dépôt: 07.07.1993
(51) Int. Cl.: H04L 12/42

(54) **Dispositif de raccordement d'une station à un réseau local comportant au moins un anneau**
Vorrichtung zum Verbinden eines Terminals an ein mindestens aus einem Ring bestehendes lokales Netz
Device for the connection of a terminal to a local network having at least one ring

(30) Priorité: 10.07.1992 FR 9208613
(43) Date de publication de la demande: 19.01.1994
(73) Titulaire: ALCATEL ALSTHOM COMPAGNIE GENERALE D'ELECTRICITE, 75008 Paris (FR)
(72) Inventeur: Guezou, Jean, F-22300 Lannion (FR); Lassaux, Jean, F-22300 Lannion (FR)
(74) Mandataire: Sciaux, Edmond

(56) Documents cités:
- EP-A- 0 089 276
- WO-A-83/00238
- INTERNATIONAL CONFERENCE ON COMMUNICATIONS vol. 3 , Juin 1982 , NEW YORK, US pages 6C.3.1 - 6C.3.5 M. TADA ET AL. 'N6770 DATALINK - A HOMOGENEUS OPTICAL RING NETWORK'

## Description

L'invention concerne un dispositif de raccordement d'une station à un réseau local comportant au moins un anneau. Dans un tel réseau, des stations sont reliées en série par un anneau. Des informations sont transmises sur cet anneau sous la forme de trames comportant chacune une adresse d'expéditeur et une adresse de destinataire. Chaque station réémet chaque trame d'informations qu'elle reçoit. Les conflits entre plusieurs stations désirant émettre des trames d'informations sont évités au moyen d'une trame particulière appelée jeton, circulant en permanence. Quand une station désire émettre des informations, elle prend le jeton, et remplace la trame jeton par une ou des trames d'information et libère le jeton à la fin d'émission de ces trames. Les autres stations se contentent alors de réémettre identiquement les trames d'informations qu'elles reçoivent. La station destinataire d'une trame d'informations reconnaît son identité dans l'adresse de destinataire portée par la trame d'informations. Elle enregistre le contenu de cette trame d'informations puis la réémet en la munissant d'un indicateur de réception. La station ayant émis cette trame d'informations la reçoit après que cette trame ait fait le tour complet de l'anneau. Cette station reconnaît son identité dans l'adresse d'expéditeur portée par la trame d'informations. Cette station arrête la circulation des données contenues dans la trame d'informations.

Un réseau local comporte en général deux anneaux, pour assurer une certaine continuité de service en cas de défaillance de l'un des anneaux. Par exemple , la demande de brevet français n°2 640 447 décrit : un réseau local à un seul anneau, un réseau local à deux anneaux, et un réseau local à quatre anneaux. Chacun de ces anneaux est supporté par un câble électrique. Dans ces trois modes de réalisation, le dispositif de raccordement comporte, pour chaque station, un relais dit d'insertion, constitué d'un double inverseur actionné par une bobine électromagnétique et permettant de contourner la station lorsqu'elle est hors service, afin de maintenir la continuité électrique de l'anneau. Le relais d'insertion permet donc d'enlever une station, ou une partie d'une station sans provoquer un arrêt complet du fonctionnement des autres stations. Le mode de réalisation comportant deux anneaux permet en outre de maintenir le fonctionnement de toutes les stations même en cas de rupture d'un des câbles reliant deux stations consécutives.

Dans le mode de réalisation à quatre anneaux, chaque station comporte deux coupleurs et il est possible de maintenir le fonctionnement de toutes les stations si un coupleur est hors service.

La commutation entre les différents anneaux est réalisée aussi par des relais électromagnétiques analogues à celui du relais d'insertion permettant de contourner chaque station.

Lorsque l'un des ces relais commute, il engendre une micro-coupure du fonctionnement du réseau, qui est absorbée par le protocole régissant les échanges d'informations sur l'anneau ou sur les anneaux.

Cependant il est envisagé de réaliser des réseaux locaux ayant des débits binaires beaucoup plus élevés. L'article "The Fiber Distributed Data Interface" par Floyd E. Ross, Journal of Data and Computer Communications Winter 1991 pages 4-22, décrit un réseau local ayant un débit de 125 mégabauds, comportant deux anneaux supportés par deux fibres optiques respectivement. Le dispositif de raccordement des stations comporte pour chaque station et pour chaque anneau, un commutateur optique permettant de contourner la station correspondante, lorsque la station est hors service. En l'état actuel de la technologie, les relais optiques sont électromécaniques et présentent un temps de commutation se chiffrant en millisecondes. La commutation de l'un de ces relais optiques provoque une micro-coupure dont la durée est très importante vis-à-vis de la durée des trames d'informations binaires transmises sur les anneaux. Il en résulte une perturbation du fonctionnement du réseau qui est compatible avec certaines applications, telles que la bureautique, mais qui n'est pas compatible avec des applications en temps réel. D'autre part, les relais optiques électromagnétiques introduisent une atténuation d'amplitude et une gigue de phase non négligeables qui s'ajoutent respectivement à l'atténuation et à la gigue de phase crées par le segment d'anneau situé entre la station considérée et le dernier dispositif régénérateur situé en amont. Il est possible de mettre hors service une station mais il n'est pas possible de mettre hors service un plus grand nombre de stations sur un même anneau, car l'accumulation des atténuations et l'accumulation des gigues de phase augmentent le taux d'erreurs binaires et peuvent même empêcher complètement le fonctionnement du réseau. Ce dispositif de raccordement permet donc de contourner une station en cas de panne d'une seule station, mais il ne tolère ni une panne de plusieurs stations simultanément, ni une installation et une mise en service progressive des stations.

La demande de brevet WO 83/00 238 décrit un dispositif de raccordement comportant un régénérateur et un dispositif de commutation. Ce dernier permet de transmettre en aval : soit un signal provenant de l'amont et qui a été régénéré, soit un signal fourni par la station qui est raccordée par le dispositif de raccordement considéré. Si la station est absente ou hors service, le dispositif de commutation transmet le signal régénéré. Il permet de contourner un nombre de stations non limité, parce que les moyens pour régénérer compensent l'atténuation et la gigue de phase apportées par le segment d'anneau situé en amont de la station mise hors service.

Cependant ce dispositif présente encore un inconvénient : si une station est hors service, et si le régénérateur est défaillant, la transmission vers l'aval est interrompue. Ce cas peut se présenter notamment lorsque l'alimentation locale tombe en panne.

Le but de l'invention est de remédier à cet inconvénient.

L'objet de l'invention est un dispositif de raccordement de stations à un réseau local comportant au moins un anneau; ce dispositif de raccordement comportant un module de raccordement par station et par anneau; ce module de raccordement comportant :
- des moyens pour régénérer les signaux fournis par l'anneau lorsque la station est hors service;
- et des premiers moyens de commutation pour acheminer les signaux régénérés soit vers la station quand elle est en service, soit en contournant cette station lorsqu'elle est hors-service;
caractérisé en ce que chaque module comporte en outre des seconds moyens de commutation pour acheminer les signaux circulant dans chaque anneau, sans passer par les moyens pour régénérer, lorsque la station est hors service et que les moyens pour régénérer sont eux aussi hors service.

Le dispositif ainsi caractérisé permet de remédier à une éventuelle panne des moyens pour régénérer. Naturellement, les seconds moyens de commutation ne peuvent être utilisés que pour un nombre limité de stations, pour les raisons mentionnées précédemment. Mais ce n'est pas réellement un inconvénient car les seconds moyens de commutation ne sont utilisés que dans le cas d'une panne des moyens pour régénérer, appartenant à l'un des modules de raccordement. Ce cas a une probabilité beaucoup plus faible que celle de la mise hors service d'une station. Ce dernier cas correspond notamment à l'installation progressive des stations, pendant laquelle de nombreux emplacements de stations peuvent rester vides pendant une longue durée, chaque emplacement comportant néanmoins les moyens de raccordement prévus pour une station. Pendant cette longue durée, une défaillance des moyens pour regénérer peut bloquer la circulation de signaux sur l'un des anneaux, il est donc particulièrement avantageux de pouvoir remédier à cette panne, même si cette possibilité est limitée à un seul module de raccordement sur chaque anneau.

Selon une autre caractéristique, les moyens pour régénérer comportent un filtre à bande étroite pour récupérer un signal d'horloge par filtrage de la gigue de phase des signaux circulant sur l'anneau correspondant à ces moyens pour régénérer.

Le dispositif ainsi caractérisé est particulièrement simple à réaliser et permet de récupérer un signal d'horloge pour régénérer les signaux circulant sur l'anneau, lorsque la station est hors service, et pour faire fonctionner la station lorsqu'elle est en service.

Selon une autre caractéristique, les premiers moyens de commutation comportent des moyens pour détecter la présence d'une station reliée audit module, et pour réaliser l'acheminement des signaux circulant sur l'anneau correspondant, si la station est absente.

Le dispositif ainsi caractérisé permet de commuter automatiquement les premiers moyens de commutation lorsque la cause de la mise hors service d'une station est l'absence de cette station.

Selon un mode de réalisation préférentiel, le dispositif de raccordement pour un réseau local comportant au moins un anneau supporté par un câble électrique, est caractérisé en ce que les premiers moyens de commutation comportent essentiellement un multiplexeur réalisé en technologie rapide, par exemple ECL, intercalé sur l'anneau, en série avec les moyens pour régénérer; et en ce que les seconds moyens de commutation comportent essentiellement un multiplexeur réalisé en technologie rapide, par exemple ECL, et intercalé directement sur ledit anneau.

Le dispositif ainsi caractérisé étant plus rapide qu'un dispositif à relais électromécanique, il permet non seulement de maintenir le fonctionnement quand un grand nombre de stations sont hors service, mais il permet en outre de contourner une station dans les cas rares mais très pénalisants où non seulement une station mais aussi ses moyens pour régénérer sont hors service. Dans un tel cas, le multiplexeur permet de rétablir le fonctionnement de l'anneau après une micro-coupure de durée négligeable, et au prix d'une atténuation d'amplitude et d'une gigue de phase qui limitent à 1 ou 2 le nombre de stations contournées sans régénération du signal.

Dans le cas où le réseau comporte deux anneaux supportés chacun par une série de conducteurs électriques reliant des stations regroupées en plusieurs groupes, chaque groupe étant enfiché sur un fond de panier supportant en outre les modules de raccordement associés à ce groupe de stations (à raison d'un module par anneau et par station), un mode de réalisation préférentiel est caractérisé en ce que tous les modules de raccordement sont identiques et comportent chacun :
- une première entrée d'anneau pour relier le module à un autre module, au moyen d'un câble électrique;
- une seconde entrée d'anneau pour relier le module à un autre module du même groupe au moyen d'un conducteur du fond de panier de ce groupe;
- des moyens pour sélectionner automatiquement la première entrée d'anneau en détectant la présence d'un câble relié à cette entrée, et pour sélectionner la seconde entrée d'anneau en détectant l'absence de câble relié à la première entrée;
- une première sortie d'anneau pour relier le module à un autre module, au moyen d'un câble électrique;
- une seconde sortie d'anneau pour relier le module à un autre module du même groupe, au moyen d'un conducteur du fond de panier de ce groupe; la première et la seconde sortie d'anneau fournissant deux signaux identiques.

Ce mode de réalisation préférentiel permet d'utiliser un seul type de module de raccordement pour toutes les stations, car la première entrée d'anneau et la première sortie d'anneau permettent des liaisons par câble, principalement pour relier deux groupes différents de stations, alors que la seconde entrée d'anneau et la seconde sortie d'anneau permettent de relier deux stations appartenant à un même groupe, au moyen d'un conducteur du fond de panier, ce qui est une façon simple de réaliser une liaison ayant une impédance caractéristique bien déterminée.

L'invention sera mieux comprise et d'autres détails apparaîtront à l'aide de la description ci-dessous et des figures l'accompagnant :
- la figure 1 représente le schéma fonctionnel de deux modules de raccordement d'un exemple de réalisation du dispositif selon l'invention;
- la figure 2 représente un schéma synoptique des liaisons reliant les modules de raccordement d'un groupe de N stations dans un exemple de réalisation du dispositif selon l'invention;
- la figure 3 représente un schéma synoptique d'un exemple de réalisation de module de raccordement utilisable pour l'une quelconque des stations de ce groupe, à l'exception de la première et de la dernière station du groupe;
- la figure 4 représente le schéma synoptique d'un exemple de réalisation de module de raccordement utilisable pour toutes les stations du groupe si l'on souhaite réaliser des modules de raccordement d'un seul type pour toutes les stations;
- la figure 5 représente le schéma synoptique d'une variante de l'exemple de réalisation représenté sur la figure 4, permettant de contourner les moyens pour régénérer.

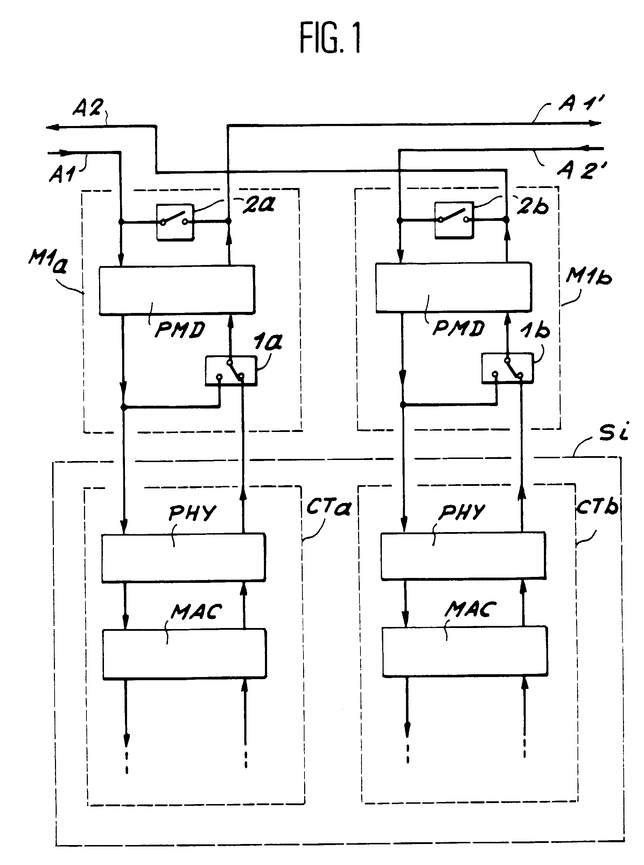

L'exemple de réalisation dont le schéma fonctionnel est représenté sur la figure 1 convient pour un réseau à deux anneaux. Ces deux anneaux peuvent être supportés respectivement par deux câbles électriques si la longueur totale de l'anneau ne dépasse pas une centaine de mètres, et ils peuvent être supportés par deux fibres optiques pour des longueurs supérieures. Cet exemple de réalisation est applicable par exemple à l'un des réseaux décrits dans l'article ou dans la demande de brevet cités ci-dessus.

La figure 1 illustre le raccordement d'une seule station Si, mais le schéma fonctionnel serait identique pour toutes les autres stations du réseau. La station Si comporte deux coupleurs de transmission CTa et CTb permettant de la coupler respectivement aux deux anneaux. Le coupleur CTa est relié à deux segments A1 et A1' d'un premier anneau par un module de raccordement M1a. Le coupleur CTb est relié à deux segments A2, A2' d'un seul second anneau par un module de raccordement M1b ayant la même structure fonctionnelle que le coupleur M1a.

Les coupleurs de transmission CTa et CTb comportent tous les deux des couches fonctionnelles PHY et MAC qui sont respectivement un protocole de couche physique et une commande d'accès au médium. La couche PHY traite le codage et décodage, le signal d'horloge, et la mise en trames pour la transmission d'informations. La couche MAC traite l'accès au médium, l'adressage, le contrôle de l'intégrité des données, l'émission et la réception des trames. Les autres couches fonctionnelles de la station Si ne sont pas représentées. Il y a notamment une couche de gestion de la station qui traite de la configuration de la station et des anneaux; et qui traite de toutes les opérations de la station dans les anneaux. Ces couches sont réalisées conformément à la norme internationale ISO/IECJTC1/SC 25.

Les deux modules de raccordement M1a et M1b ont la même structure fonctionnelle et comportent une couche fonctionnelle PMD appellée couche dépendante du médium physique. La couche PMD réalise l'adaptation au médium utilisé, par exemple une fibre optique, au moyen de composants tels qu'un émetteur et un récepteur optiques, adaptés au type de médium utilisé.

Une première entrée de la couche PMD est reliée au segment A1 qui fournit un signal arrivant du premier anneau. Une première sortie de la couche PMD est reliée au segment A1' du premier anneau, et lui fournit un signal. Une seconde entrée de la couche PMD est reliée à une sortie d'une première fonction de commutation 1a. Une seconde sortie de la couche PMD est reliée directement à une entrée de la couche PHY du coupleur CTa, et à une entrée de la première fonction de commutation 1a. Cette seconde sortie fournit un signal régénéré à partir du signal arrivant sur la première entrée de la couche PMD. Une seconde entrée de la fonction de commutation 1a est reliée à une sortie de la couche PHY du coupleur CTa.

Une seconde fonction de commutation 2a relie les segments A1 et A1' du premier anneau. La seconde fonction de commutation 2a est représentée schématiquement par un interrupteur car elle permet d'acheminer directement les signaux du segment A1 vers le segment A1' du premier bus sans passer par la couche PMD du module M1a. De même, une seconde fonction de commutation 2b dans le module M1b permet d'acheminer directement des signaux du segment A2' au segment A2 du second anneau.

La première fonction de commutation 1a est représentée schématiquement par un inverseur car elle permet, lorsque la station Si est en service, de transmettre à la seconde entrée de la couche PMD un signal fourni par la couche PHY; et de transmettre à cette même entrée de la couche PMD, lorsque la station Si est hors service, le signal régénéré fourni par la seconde sortie de la couche PMD.

A cause de son débit élevé (125 mégabauds), le signal fourni par l'anneau est affecté d'une atténuation d'amplitude et d'une gigue de phase qui sont fonctions de la distance parcourue à partir des derniers moyens ayant régénéré ce signal. Lorsque la fonction de commutation 1a contourne la station Si, le signal transmis par cette fonction de commutation est affecté d'une atténuation d'amplitude et d'une gigue de phase créés par le segment d'anneau situé en amont. Si le signal arrivant de l'anneau n'était pas régénéré avant d'être réémis sur l'anneau, l'atténuation d'amplitude et la gigue de phase créés par le segment en amont s'additionneraient respectivement avec l'atténuation d'amplitude et la gigue de phase crées par le segment en aval et par la première fonction de commutation 1a. L'accumulation de ces atténuations et de ces gigues de phase atteindrait un tel niveau qu'il ne serait pas possible de maintenir un anneau en fonctionnement lorsque plusieurs stations sont hors service. Grâce au dispositif de raccordement selon l'invention, des stations peuvent être absentes en nombre non limité car l'atténuation d'amplitude et la gigue de phase apportées par le segment d'anneau situé en amont sont neutralisées en régénérant le signal dans la couche PMD.

La seconde fonction de commutation est utilisée dans des cas beaucoup plus rares, principalement lors de la défaillance de la couche PMD. Une telle défaillance oblige à acheminer le signal sans le régénérer. La gigue de phase provoquée alors par la seconde fonction de commutation 2a, 2b limite à une ou deux le nombre de stations qui peuvent être contournées au moyen de cette seconde fonction de commutation dans un même anneau, et oblige à limiter la distance maximale entre stations.

De même, le module M1b réalise une première fonction de commutation 1b, et une fonction de régénération analogues à celles qui viennent d'être décrites, pour acheminer et régénérer un signal arrivant sur le segment A2' du second anneau avant de le réémettre sur le segment A2, dans le cas où la station Si est hors service.

Les modules de raccordement M1a et M1b sont implantés dans des unités physiquement séparées de la station Si, ce qui permet à ces modules d'être présents et de remplir leurs fonctions même dans le cas où la station Si est absente.

Une variante de réalisation peut consister à placer la première fonction de commutation en amont de la première fonction de régénération pour neutraliser en outre l'atténuation d'amplitude et la gigue de phase introduites par cette première fonction de commutation.

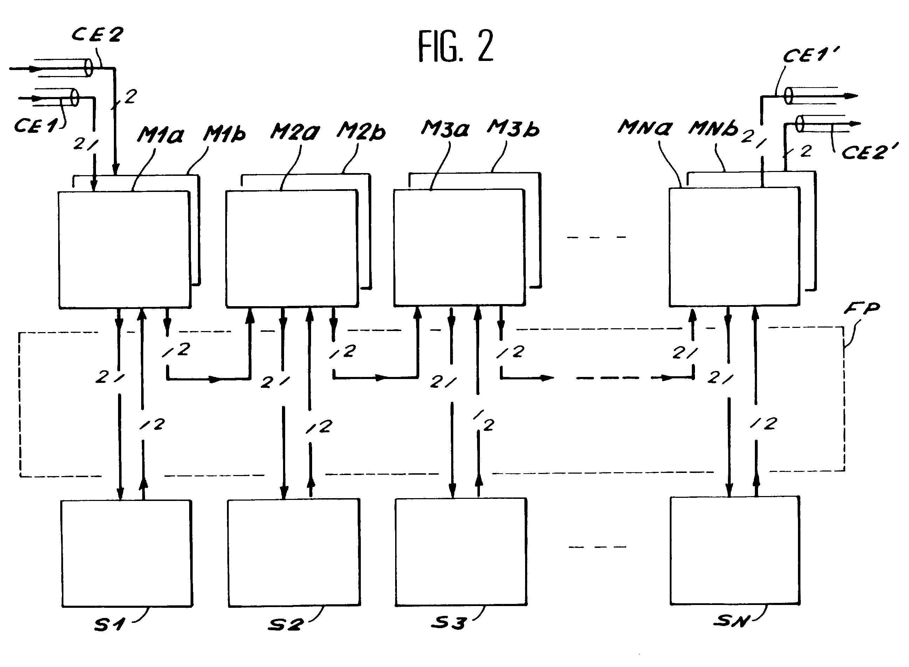

La figure 2 représente le schéma synoptique des liaisons dans un groupe de N stations d'un réseau local qui peut comporter une pluralité de tels groupes de stations. Par exemple N = 8. Les N stations sont enfichées sur un fond de panier FP qui supporte en outre 2N modules de raccordement M1a, M1b, M2a, M2b..., MNa, MNb. Dans cet exemple, la distance maximale séparant deux groupes de stations est inférieure ou égale à 100 mètres. Il est donc possible de relier deux groupes consécutifs de stations au moyen de câbles électriques CE1, CE2, CE1', CE2' comportant une paire blindée pour chaque anneau. Il en résulte une simplification de la réalisation car il n'est pas nécessaire d'utiliser des émetteurs et des récepteurs optiques, coûteux, encombrants et de fiabilité insuffisante. A l'intérieur d'un même groupe de stations, des conducteurs du fond de panier FP permettent de réaliser des liaisons entre les modules de raccordement des différentes stations.

Ces liaisons ont un débit de 125 mégabauds par exemple. Dans un tel cas, la gigue de phase sur les signaux transmis est de l'ordre de quelques nano-secondes auxquelles s'ajoutent quelques nano-secondes de distorsion du rapport cyclique de l'horloge. C'est pourquoi il est nécessaire de régénérer le signal circulant dans un anneau, lorsque plus de deux modules de raccordement commutent pour contourner les coupleurs qui leur sont associés.

Dans cet exemple, les modules de raccordement M1a, M1b associés à la station la plus en amont, S1, et les modules de raccordement MNa, MNb associés à la station la plus en aval, SN, sont utilisés pour raccorder ce groupe de stations à deux autres groupes de stations; alors que les autres modules de raccordement sont utilisés pour relier entre elles les autres stations, dites intermédiaires, appartenant au groupe considéré. Il en résulte que les modules de raccordement M1a, M1b et MNa, MNb comportent des entrées et des sorties pour des câbles blindés CE1, CE2, CE1', CE2', alors que les autres modules de raccordement peuvent ne comporter que des entrées et des sorties reliées à des conducteurs du fond de panier FP.

Le module de raccordement M1a possède une entrée pour le câble blindé CE1 supportant un segment du premier anneau. Le module de raccordement M1b possède une entrée pour un câble blindé CE2 supportant un segment du second anneau. Le module de raccordement MNa possède une sortie pour un câble blindé CE1' supportant un segment du premier anneau. Le module de raccordement MNb possède une sortie pour un câble blindé CE2' supportant un segment du second anneau. Tous les modules de raccordement M1a, M1b, ..., MNa, MNb possèdent chacun une entrée et une sortie différentielles reliées respectivement à une sortie et à entrée différentielles de la station associée au module considéré, par deux lignes différentielles constituées chacune de deux conducteurs du fond de panier et d'un plan de masse. Chaque module de raccordement à l'exception des modules MNa, MNb possède une sortie différentielle reliée à une entrée différentielle d'un autre module par une ligne différentielle constituée de deux conducteurs. Pour plus de clarté, les liaisons entre les modules de raccordement M1b, M2b, ..., MNb; et les liaisons entre ces modules et les stations S1, ..., SN ne sont pas représentées sur la figure 2 mais sont identiques aux liaisons reliant les modules M1a, M2a, ..., MNa et les stations S1, ..., SN.

Le fait de séparer les modules de raccordement par rapport aux stations permet de déconnecter ou de ne pas installer certaines stations, sans interrompre le fonctionnement des anneaux. Mais, par contre, tous les emplacements prévus pour une station doivent être équipés de leurs deux modules de raccordement, afin d'assurer la continuité des deux anneaux.

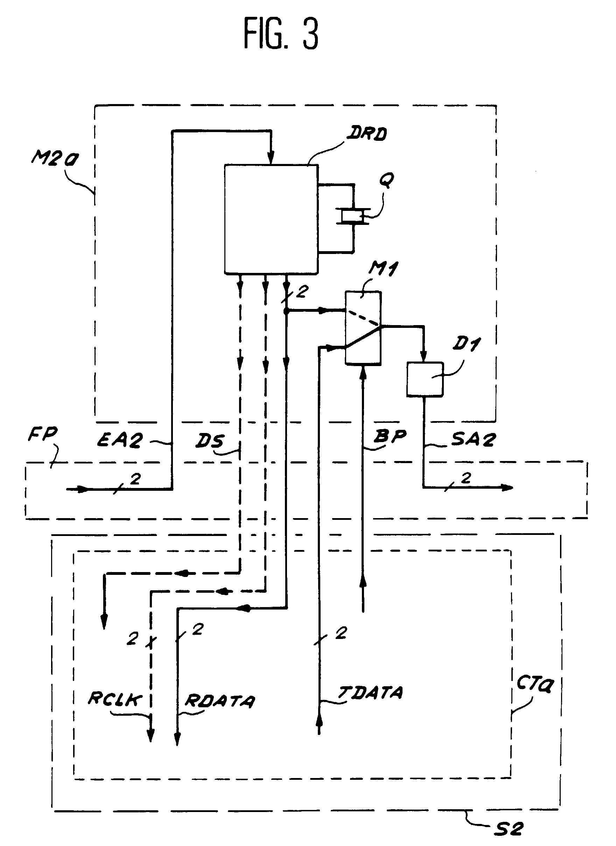

La figure 3 représente le schéma synoptique d'un exemple de réalisation de module de raccordement convenant uniquement pour être un module intermédiaire, par exemple le module M2a. Il comporte : un circuit DRD de récupération de signal d'horloge et de dégigage, associé à un résonateur à quartz Q; un multiplexeur à deux entrées et une sortie, M1; et un émetteur de ligne, D1. Tous ces composants sont réalisés en technologie ECL et tous les signaux logiques échangés ont des niveaux conformes à cette technologie. Le module M2a possède :
- une entrée différentielle EA2 reliée au module de raccordement M1a associé à la station S1 située en amont;
- une sortie différentielle SA2 reliée au module de raccordement M3a associé à la station S3 située en aval;
- une sortie différentielle RDATA fournissant au coupleur CTa de la station S2, le signal binaire reçu sur l'anneau, par l'entrée EA2, après l'avoir régénéré en amplitude et en phase;
- une sortie optionnelle différentielle RCLK fournissant un signal d'horloge récupéré, au coupleur de transmission CTa de la station S2, via le fond de panier FP;
- une sortie optionnelle DS fournissant un signal binaire indiquant la détection d'un signal de données sur l'anneau, au coupleur CTa de la station S2, via le fond de panier FP;
- une entrée différentielle TDATA reliée, par le fond de panier FP, à une sortie différentielle du coupleur CTa de la station S2 pour recevoir sous forme série une suite de données binaires à transmettre sur l'anneau;
- une entrée BP reliée, par le fond de panier FP, au coupleur CTa de la station S2, pour recevoir un signal binaire commandant le multiplexeur M1.

Les sorties RCLK et DS sont optionnelles car, dans certains cas, le coupleur de transmission CTa de la station peut générer lui-même des signaux équivalents, à partir des données fournies par la sortie RDATA du module de raccordement M2a. Le circuit DRD existe sous la forme de circuit intégré disponible dans le commerce, par exemple le modèle V23812 de Siemens, ou TRU-200A d'ATT.

Le circuit DRD de récupération de signal d'horloge et de dégigage comporte une entrée qui constitue l'entrée EA2, et trois sorties qui constituent respectivement les sorties DS, RCLK, RDATA. La sortie RDATA est reliée aussi à une première entrée du multiplexeur M1. La seconde entrée du multiplexeur M1 est reliée à l'entrée TDATA. Une entrée de commande du multiplexeur M1 est reliée à l'entrée BP. La sortie du multiplexeur M1 est reliée à la sortie SA2 par l'intermédiaire de l'émetteur de ligne D1.

Lorsque la station S2 est présente et en service, elle fournit à l'entrée BP un niveau constant qui commute le multiplexeur M1 pour qu'il transmette le signal binaire fourni par la station S2 à l'entrée TDATA. Lorsque la station S2 est hors service, notamment si elle est absente, l'entrée BP est ramenée à un niveau différent qui commute le multiplexeur M1 pour qu'il transmette le signal binaire régénéré par le circuit DRD.

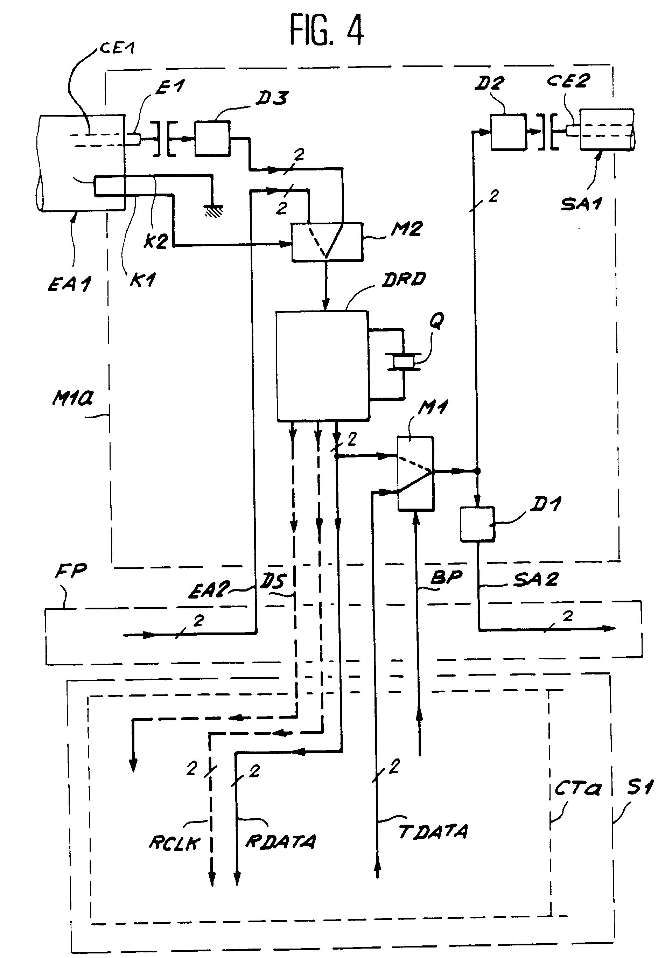

La figure 4 représente le schéma synoptique d'un module de raccordement pouvant être associé à la station la plus en amont ou à la station en aval dans un groupe de stations, mais pouvant aussi être associé à une station intermédiaire d'un groupe de stations. Dans cet exemple, c'est le module Mla associé à la station S1. Il comporte un certain nombre d'éléments identiques à ceux du module M2a décrit précédemment. Ces éléments portent les mêmes références. Les éléments supplémentaires sont les suivants :
- une entrée EA1 munie d'un connecteur comportant trois contacts, non repésentés, pour connecter une paire blindée CE1, et deux autres contacts K1 et K2 pour connecter un court-circuit CC, intégré au câble de liaison CE1 de telle sorte qu'il est possible de détecter la présence du câble CE1 en détectant ce court-circuit entre les contacts K1 et K2;
- un récepteur de ligne D3 ayant une entrée différentielle reliée à la paire différentielle du câble CE1;
- un multiplexeur M2 réalisé en technologie ECL par exemple et comportant trois entrées et une sortie, cette dernière étant reliée à l'entrée du circuit DRD à la place de l'entrée EA2; l'entrée EA2 étant maintenant reliée à une première entrée du multiplexeur M2; la seconde entrée du multiplexeur M2 étant reliée à la sortie du récepteur de ligne D3; une entrée de commande du multiplexeur M2 étant reliée au contact K1; le contact K2 étant relié à un potentiel de référence;
- une sortie SA1 munie d'un connecteur pour brancher un câble constitué d'une paire blindée CE2;
- un émetteur de ligne D2 dont la sortie est reliée à la paire blindée du câble CE2, et dont l'entrée est reliée à la sortie du multiplexeur M1, comme l'entrée de l'émetteur de ligne D1.

Lorsque l'entrée EA1 est connectée au câble CE1 associé au court-circuit CC, les contats K1 et K2 sont court-circuités et donc l'entrée de commande du multiplexeur M2 est reliée au potentiel de référence. Ce potentiel de référence provoque la commutation du multiplexeur M2, de telle sorte qu'il relie la sortie du récepteur de ligne D3 à l'entrée du circuit DRD de récupération d'horloge et de dégigage. Lorsqu'il n'y a pas de câble connecté à l'entrée EA1, l'absence du court-circuit CC fait que l'entrée de commande du multiplexeur M2 ne reçoit pas le potentiel de référence. Le multiplexeur M2 est alors dans un état où il transmet le signal fourni à l'entrée EA2 par une ligne différentielle, du fond de panier FP, venant d'un module de raccordement associé à la station située en amont.

Dans le cas du module M1a associé à la station S1, il n'y a pas de stations situées en amont dans le même groupe de stations. Le module M1a est connecté à un autre groupe par un câble CE1, et le multiplexeur M2 est commuté pour relier la sortie du récepteur de ligne D3 à l'entrée du circuit DRD. Le multiplexeur M2 trouve son utilité dans le cas où on souhaite utiliser un même type de module de raccordement pour toutes les stations S1,..., SN. Pour une station intermédiaire, l'entrée EA1 n'est pas utilisée, et le multiplexeur M2 commute automatiquement l'entrée du circuit DRD pour recevoir un signal provenant de l'entrée EA2.

Pour les sorties SA1 et SA2 aucune commutation n'est nécessaire, elles fournissent deux signaux identiques, fournis respectivement par les émetteurs de lignes D1 et D2 amplifiant la puissance du signal fourni par la sortie du multiplexeur M1. Selon que la station associée au module de raccordement est ou n'est pas la station la plus en aval dans un groupe, la sortie SA2 est utilisée ou bien la sortie SA1 est utilisée.

Le multiplexeur M1 remplit la fonction décrite précédement, en se référant à la figure 3.

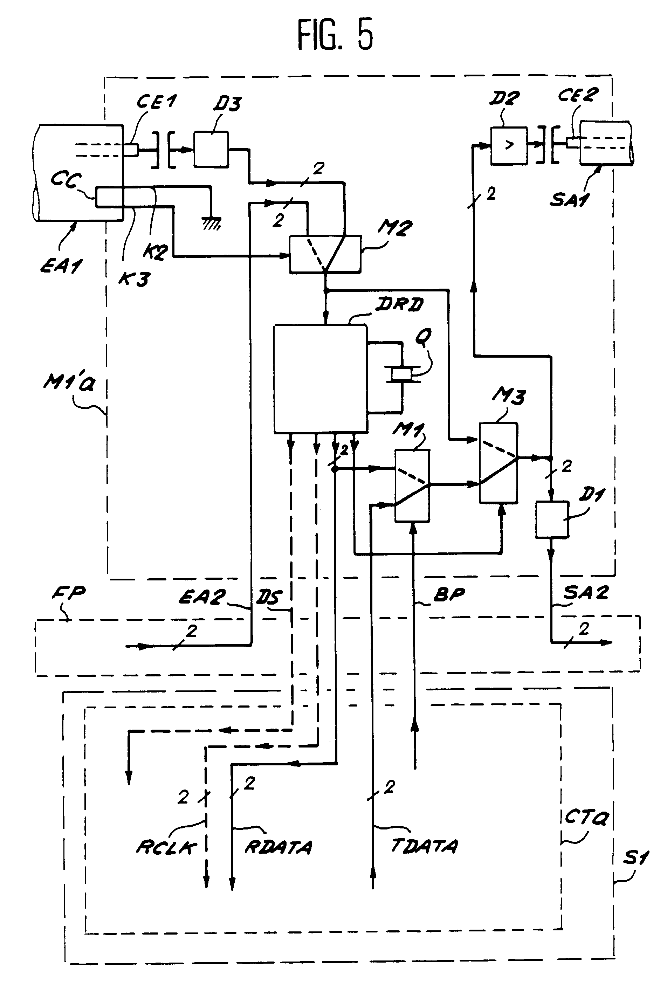

La figure 5 représente le schéma synoptique d'une variante de réalisation du module M1a représenté sur la figure 4. Cette variante peut, elle aussi, être utilisée pour toutes les stations. Elle comporte un dispositif de commutation supplémentaire pour contourner le circuit DRD de récupération d'horloge et de dégigage, lorsque celui-ci est en hors service. Comme cela a été mentionné précédemment, le fait de contourner une station sans régénérer le signal entraîne notamment une augmentation de la gigue de phase, qui est tolérable pour une station mais qui devient intolérable si l'on augmente le nombre de stations ainsi contournées dans un même anneau. Ce dispositif de commutation supplémentaire ne doit donc être utilisé que dans le cas d'une panne du circuit DRD de l'un des modules de raccordement.

Il comporte un multiplexeur M3 à trois entrées et à une sortie, réalisé en technologie ECL. La sortie du multiplexeur M1 ne va plus directement aux entrées des émetteurs de ligne D1 et D2, mais à une première entrée du multiplexeur M3. Une seconde entrée du multiplexeur M3 est reliée à la sortie du multiplexeur M2. La sortie du multiplexeur M3 est reliée aux entrées des émetteurs de lignes D1, et D2. Une entrée de commande du multiplexeur M3 est reliée à une sortie supplémentaire du circuit DRD de récupération de signal d'horloge et de dégigage, fournissant un signal de niveau constant lorsque ce circuit fonctionne correctement. Lorsque l'entrée de commande du multiplexeur M3 reçoit ce signal, il est commuté dans un état où il transmet aux émetteurs de ligne D1 et D2 le signal fourni par la sortie du multiplexeur M1. Lorsque le circuit DRD ne fonctionne plus, il ne fournit plus le même signal à l'entrée de commande du multiplexeur M3. Celui-ci commute dans un état où il transmet, aux émetteurs de ligne D1 et D2, le signal fourni par la sortie du multiplexeur M2. Le circuit DRD est alors contourné. La continuité de l'anneau est maintenue, mais le signal n'est pas régénéré.

La portée de l'invention n'est pas limitée aux exemples de réalisation décrits ci-dessus, en particulier elle n'est pas limitée aux réseaux locaux comportant deux anneaux supportés par des câbles électriques. Il est à la portée de l'Homme de l'Art de l'appliquer à des réseaux comportant un nombre quelconque d'anneaux, et ayant un autre type de support, tel que des fibres optiques.

## Revendications

1. Dispositif de raccordement de stations à un réseau local comportant au moins un anneau (A1, A2); ce dispositif de raccordement comportant un module de raccordement (M1a, M1b) par station et par anneau; ce module de raccordement comportant :
- des moyens (PMD) pour régénérer les signaux fournis par l'anneau lorsque la station (Si) est hors service;
- et des premiers moyens de commutation (1a, 1b) pour acheminer les signaux régénérés soit vers la station (Si) quand elle est en service, soit en contournant cette station lorsqu'elle est hors-service;
caractérisé en ce que chaque module (M1a, M1b) comporte en outre des seconds moyens de commutation (2a, 2b) pour acheminer les signaux circulant dans chaque anneau, sans passer par les moyens pour régénérer (PMD), lorsque la station est hors service et que les moyens pour régénérer (PMD) sont eux aussi hors service.

2. Dispositif selon la revendication 1, caractérisé en ce que les moyens pour régénérer (PMD) comportent un filtre (DRD,Q) à bande étroite pour récupérer un signal d'horloge en filtrant la gigue des signaux circulant sur l'anneau correspondant.

3. Dispositif selon la revendication 1, caractérisé en ce que les premiers moyens de commutation comportent des moyens (BP, M1) pour détecter la présence d'une station (S1) reliée audit module (M1a), et pour réaliser l'acheminement des signaux circulant sur l'anneau correspondant, si la station est absente.

4. Dispositif selon la revendication 1, caractérisé en ce que, pour un réseau local comportant au moins un anneau supporté par un câble électrique, les premiers moyens de commutation comportent essentiellement un multiplexeur (M1) réalisé en technologie rapide et intercalé sur l'anneau, en série avec les moyens pour régénérer (DRD, Q);
et en ce que les seconds moyens de commutation (2a,2b) comportent essentiellement un multiplexeur (M3) réalisé en technologie rapide, intercalé sur l'anneau, et contournant les premiers moyens de commutation (M1) et les moyens pour régénerer (DRD, Q), lorsque ces derniers sont hors service.

5. Dispositif selon la revendication 1, pour deux anneaux supportés chacun par une série de conducteurs électriques (CE1, CE2) reliant des stations regroupées en plusieurs groupes, chaque groupe (S1,..., SN) étant enfiché sur un fond de panier (FP) supportant en outre les modules de raccordement (M1a, M1b, ..., MNa, MNb) associés à ce groupe de stations ;
tous les modules de raccordement étant identiques et comportant chacun :
- une première entrée d'anneau (EA1) pour relier le module à un autre module, au moyen d'un câble électrique (CE1);
- une seconde entrée d'anneau (EA2) pour relier le module à un autre module du même groupe, au moyen d'un conducteur du fond de panier (FP) de ce groupe;
- des moyens (CC, K1, K2, M2) pour sélectionner automatiquement la première entrée d'anneau (EA1) en détectant la présence d'un câble (CE1) relié à cette entrée, et pour sélectionner la seconde entrée d'anneau (EA2) en détectant l'absence de câble relié à la première entrée.
- une première sortie d'anneau (SA1) pour relier le module à un autre module, au moyen d'un câble électrique (CE2);
- une seconde sortie d'anneau (SA2) pour relier le module à un autre module du même groupe, au moyen d'un conducteur du fond de panier (FP) de ce groupe; la première et la seconde sortie d'anneau (SA1, SA2) fournissant deux signaux identiques.

## Patentansprüche

1. Vorrichtung zum Anschluß von Stationen an ein lokales Netz, das mindestens einen Ring (A1, A2) aufweist; wobei diese Anschlußvorrichtung einen Anschlußmodul (Mla, Mlb) pro Station und pro Ring aufweist; wobei dieser Anschlußmodul umfaßt:
- Mittel (PMD) zur Regeneration der von dem Ring gelieferten Signale, wenn die Station (Si) außer Betrieb ist;
- und erste Mittel zur Umschaltung (1a, 1b), um die regenerierten Signale entweder zur Station (Si) zu leiten, wenn diese in Betrieb ist, oder unter Umgehung der Station weiterzuleiten, wenn diese außer Betrieb ist;
dadurch gekennzeichnet, daß jeder Modul (M1a, M1b) außerdem zweite Mittel zur Umschaltung (2a, 2b) umfaßt, um die in jedem Ring kreisenden Signale ohne Durchlaufen der Regenerationsmittel (PMD) weiterzuleiten, wenn die Station außer Betrieb ist und wenn die Regenerationsmittel (PMD) selbst ebenfalls außer Betrieb sind.

2. Vorrichtung nach Anspruch 1, dadurch gekennzeichnet, daß die Regenerationsmittel (PMD) ein Schmalbandfilter (DRD, Q) aufweisen, um durch Filtern des Jitters der Signale, die auf dem entsprechenden Ring kreisen, ein Taktsignal rückzugewinnen.

3. Vorrichtung nach Anspruch 1, dadurch gekennzeichnet, daß die ersten Umschaltmittel Mittel (BP, M1) aufweisen, um die Anwesenheit einer mit diesem Modul (Mla) verbundenen Station (S1) zu erfassen und um die auf dem entsprechenden Ring kreisenden Signale weiterzuleiten, wenn die Station fehlt.

4. Vorrichtung nach Anspruch 1, dadurch gekennzeichnet, daß für ein lokales Netz, das mindestens einen Ring aufweist, der von einem elektrischen Kabel getragen wird, die ersten Umschaltmittel im wesentlichen einen Multiplexer (M1) umfassen, der in schneller Technologie verwirklicht ist und auf dem Ring in Reihe mit den Regenerationsmitteln (DRD, Q) zwischengeschaltet ist;
und daß die zweiten Umschaltmittel (2a, 2b) im wesentlichen einen Multiplexer (M3) umfassen, der in schneller Technologie verwirklicht ist, direkt auf dem Ring zwischengeschaltet ist und die ersten Umschaltmittel (M1) und die Regenerationsmittel (DRD, Q) umgeht, wenn diese letzteren außer Betrieb sind.

5. Vorrichtung nach Anspruch 1, für zwei Ringe, die jeweils von einer Reihe elektrischer Leitungen (CE1, CE2) getragen werden, welche in mehrere Gruppen zusammengefaßte Stationen verbinden, wobei jede Gruppe (S1, ..., SN) an einem Verteiler (FP) angeschlossen ist, der außerdem die dieser Gruppe von Stationen zugehörigen Anschlußmodule (M1a, M1b, ..., MNa, MNb) trägt, wobei sämtliche Anschlußmodule identisch sind und jeweils umfassen:
- einen ersten Ringeingang (EA1), um den Modul mittels eines elektrischen Kabels (CE1) mit einem anderen Modul zu verbinden;
- einen zweiten Ringeingang (EA2), um den Modul mittels einer Leitung des Verteilers (FP) dieser Gruppe mit einem anderen Modul derselben Gruppe zu verbinden;
- Mittel (CC, K1, K2, M2), um automatisch den ersten Ringeingang (EA1) zu wählen, wenn die Anwesenheit eines mit diesem Eingang verbundenen Kabels (CE1) festgestellt wird, und um den zweiten Ringeingang (EA2) zu wählen, wenn das Fehlen eines mit dem ersten Eingang verbundenen Kabels festgestellt wird;
- einen ersten Ringausgang (SA1), um den Modul mittels eines elektrischen Kabels (CE2) mit einem anderen Modul zu verbinden;
- einen zweiten Ringausgang (SA2), um den Modul mittels einer Leitung des Verteilers (FP) dieser Gruppe mit einem anderen Modul derselben Gruppe zu verbinden; wobei der erste und der zweite Ringausgang (SA1, SA2) zwei identische Signale liefern.

## Claims

1. Device for connecting stations to a local area network comprising at least one ring (A1, A2), said connection device comprising a connection module (M1a, M1b) for each station and for each ring and said connection module comprising:
- means (PMD) for regenerating signals supplied by the ring when the station (CTa) is out of service, and
- first switch means (1a, 1b) to route the regenerated signals to the station (CTa) when it is in service or to bypass said station when it is not in service,
characterised in that each module (M1a, M1b) further comprises second switch means (2a, 2b) for routing the signals circulating in each ring in such a way as to bypass the regenerator means (PMD) when the station is out of service and the regenerator means (PMD) are also out of service.

2. Device according to claim 1 characterised in that the regenerator means (PMD) comprise a narrowband filter (DRD, Q) for recovering a clock signal and filtering jitter affecting signals circulating on the respective ring.

3. Device according to claim 1 characterised in that the first switch means comprise means (BP, M1) for sensing the presence of a station (S1) connected to said connection module (Mla) and for routing signals circulating on the respective ring if the station is absent.

4. Device according to claim 1 characterised in that for a local area network comprising at least one ring supported by an electrical cable the first switch means essentially comprise a high-speed technology multiplexer (M1) in the ring in series with the regenerator means (DRD, Q),
and in that the second switch means (2a, 2b) essentially comprise a high-speed technology multiplexer (M3) in the ring bypassing the first switch means (M1) and the regenerator means (DRD, Q) when the latter are out of service.

5. Device according to claim 1 for two rings each supported by a series of electrical conductors (CE1, CE2) connecting stations grouped into a plurality of groups each group (S1, ..., SN) being plugged into a respective backplane (FP) further supporting the connection modules (M1a, M1b, ..., MNa, MNb) associated with said group of stations;
all the connection modules being identical and each comprising:
- a first ring input (EA1) for connecting the module to another module by means of an electrical cable (CE1),
- a second ring input (EA2) for connecting the module to another module of the same group by means of a conductor of the backplane (FP) of said group,
- means (CC, K1, K2, M2) for selecting automatically the first ring input (EA1) on sensing the presence of a cable (CE1) connected to said input or the second ring input (CE2) on sensing the absence of any cable connected to the first input,
- a first ring output (SA1) for connecting the module to another module by means of an electrical cable (CE2), and
- a second ring output (SA2) for connecting the module to another module of the same group by means of a conductor of the backplane (FP) of said group, the first and second ring outputs (SA1, SA2) supplying two identical signals.
